(19) Europäisches Patentamt
European Patent Office
Office européen des brevets

(11) **EP 1 873 482 A2**

(12) **EUROPEAN PATENT APPLICATION**

(43) Date of publication:
**02.01.2008 Bulletin 2008/01**

(51) Int Cl.:
***G01B 11/06*** *(2006.01)*

(21) Application number: **07018404.9**

(22) Date of filing: **24.06.2003**

(84) Designated Contracting States:
**AT BE BG CH CY CZ DE DK EE ES FI FR GB GR HU IE IT LI LU MC NL PT RO SE SI SK TR**

(30) Priority: **20.06.2003 KR 20030040312**

(62) Document number(s) of the earlier application(s) in accordance with Art. 76 EPC:
**03817216.9 / 1 636 541**

(71) Applicant: **LG Electronics Inc.**
**Seoul 150-721 (KR)**

(72) Inventors:
  • **Jeong, Seong Yun**
    **Seoul 137-724 (KR)**
  • **Kim, Jin Yong**
    **Seongnam-si**
    **463-070, Gyeonggi-do (KR)**

  • **Kim, Jin Hong**
    **Yongin-si**
    **449-749 Gyeonggi-do (KR)**
  • **Seo, Hun**
    **Yongin-si**
    **449-767 Gyeonggi-do (KR)**
  • **Kwak, Keum Cheol**
    **130-871 Seoul (KR)**

(74) Representative: **Menges, Christian Alexander et al**
    **Diehl & Partner GbR.**
    **Augustenstr. 46**
    **80333 Munich (DE)**

Remarks:
    This application was filed on 19.09.2007 as a divisional application to the application mentioned under INID code 62.

(54) **System and device for measuring the thickness of one or more layers of an optical disc and corresponding medium**

(57) A system for measuring the thickness of one or more layers (32) of an optical disc that includes a spacer layer (32b) and a cover layer (32a) by using an interference effect of an optical disc layer is disclosed. The apparatus comprises a spectroscope (42) to separate light, reflected from a surface of an optical disc, into constituent frequencies, an optical intensity measuring unit (44) to measure intensities of the constituent frequencies, respectively, as a first spectrum of data, and a processor (46). The processor (46) is adapted to do at least the following: convert the first spectrum data into a second spectrum of values that exhibits variation as a function of wavelength and refractive index, transform the second spectrum using a Fast Fourier Transform, and detect a thickness of one or more of the spacer layer (32b) and the cover layer (32a), respectively, based upon the transformed spectrum.

Moreover, a corresponding device and machine-readable medium are disclosed.

FIG. 3

```
            start
              │
┌─────────────────────────────────────────────┐
│ detect an intensity of a reflective light    │── S10
│ according to the wavelength of light as      │
│ spectrum data for each wavelength            │
└─────────────────────────────────────────────┘
              │
┌─────────────────────────────────────────────┐
│ convert the detected spectrum data for each  │── S20
│ wavelength into a spectrum value as a        │
│ function of a wavelength that reflects the   │
│ refractive index                             │
└─────────────────────────────────────────────┘
              │
┌─────────────────────────────────────────────┐
│ detect thickness of a spacer layer and a     │
│ cover layer, respectively, by converting the │── S30
│ converted value into a length of an          │
│ interference area for representing a layer   │
│ thickness of the optical disc through the FFT│
└─────────────────────────────────────────────┘
              │
            end
```

**Description**

**Technical Field**

The present invention relates to a method for measuring thickness of an optical disc, and more particularly, to a method for measuring thickness of an optical disc from a position of a peak value of a reflective light in an interference area obtained from Fast Fourier Transform (hereinafter referred to as FFT) of a reflective spectrum at an axis being reflected by a reflective index as a function of wavelength.

**Background Art**

Until the present, there are recording media such as a magnetic recording tape, a Laser Disc (LD) and a Compact Disc (CD) as optical discs, and a Digital Video Disc (hereinafter referred to as DVD) with a vast information recoding capacity. Since the optical disc among the recording media utilizes a digital recording system different from previous magnetic recording tape and has very small volume and a light weight, the optical disc is convenient to keep and carry so that a user prefers the optical disc more other recording medium.

Moreover, according to a trend of high density and high integration together with development of industry, a Blu-ray_Disc (BD) as a High Density DVD (HD-DVD) with integration higher than the present DVD is under investigation and development. However, any product should be used without error, and if the quality of the product deteriorates, a maker who manufactures the product loses his reliability. This case causes more series problem in the optical disc having minute signal characteristics and brings inferior quality originated from error of thickness of a disc, scratch, deformity, fingerprint, and attachment of foreign material during manufacturing of the product.

More especially, the thickness of a disc is a major factor affecting the productivity and the reliability, and it is necessary to measure the thickness in real time for processing control in manufacturing process.

The optical disc can be treated as a thin film. If the thickness of the thin film is under several $\mu$m, the measurement of the thickness depends on a quantitative measurement such as a thin film analysis by ellipsometry and measurement of reflection factor, and if the thickness of a relative thick thin film equal to and greater that several $\mu$m is analyzed, it is used a measurement method for measuring thickness from a vibration period appeared in a reflective or transparent spectrum due to a interference effect by the thin film.

At that time, the wavelength resolving or the coherency of a monochromator deteriorates, but there is a valuable use of a method for obtaining a vibration period (or frequency) of the spectrum by the interference and determining the thickness of the thin film from the obtained vibration period. However, if thick thin film, since necessary time to estimate the thickness of the thin film increases because of appearance of a value with large period. In order to response to demands from the industries to wish to rapidly measure the thickness of the thick thin film, the conventional FFT is utilized as a rapid measurement for the vibration period of the spectrum.

**Disclosure of Invention**

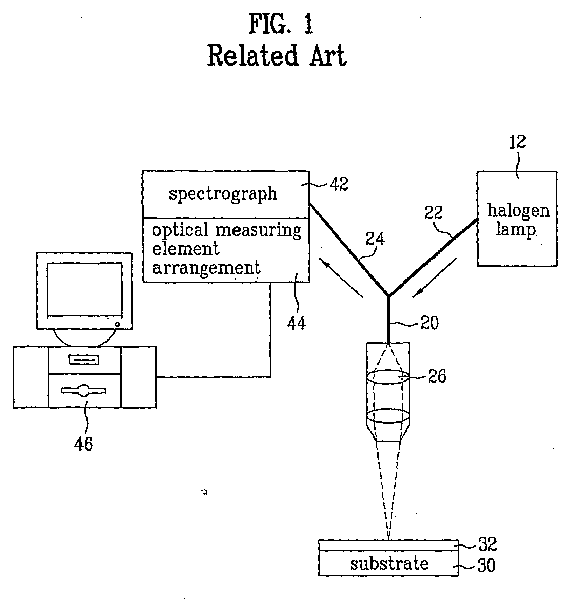

Fig. 1 illustrates a schematic construction of the conventional apparatus for measuring the thickness of a thin film.

As illustrated in FIG. 1, according to the apparatus for measuring the thickness of the thin film by measuring a reflectivity spectrum, the light from a halogen lamp 12 is projected on a substrate 30 with a thin film 32 through one 22 of optical fibers 20 and a lens 26 in perpendicular direction, a reflected light from the substrate 20 is transmitted to a spectrograph 42 through the lens 26 and another 24 of the optical fibers 20, the spectrograph 42 splits the light reflected from a surface of a sample on the substrate 30 according to the intensity of each wavelength, and the split light goes into an optical measuring element arrangement 44 so that the luminance intensity at each wavelength is supplied to a computer 46. The computer 46 can measure the thickness of the thin film by using a variety of ways by using the luminance intensity at each wavelength as spectrum data.

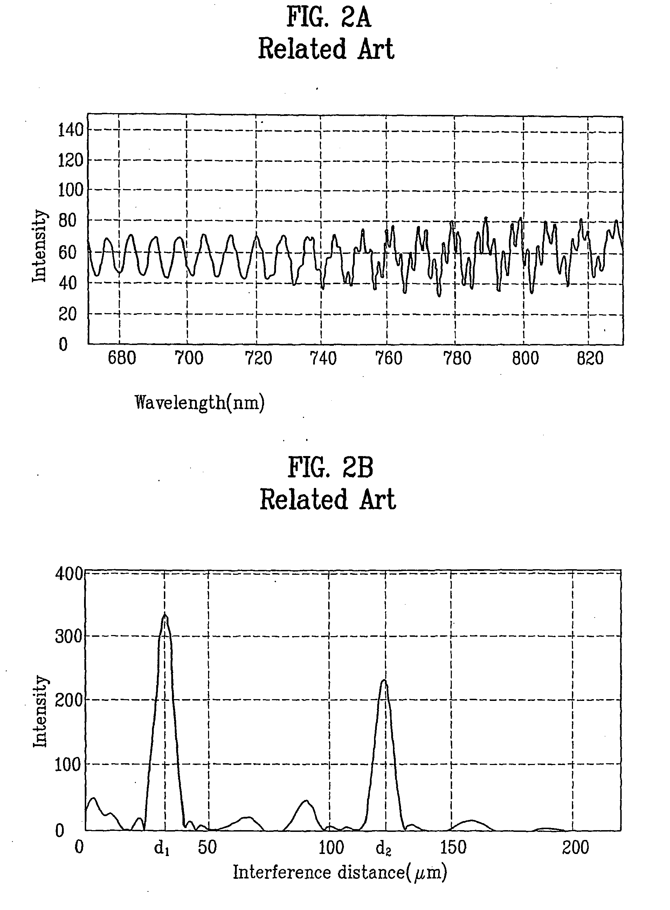

FIGs. 2A and 2B are views illustrating a case that the refractive index is applied when the thickness is measured by the conventional method, FIG. 2A is a graph showing a luminous intensity data spectrum at each wavelength supplied to a computer according to the conventional method, and FIG. 2B is a graph of Fast Fourier Transform of the reflectivity spectrum by using FIG. 2A.

As illustrated in FIGs. 2A and 2B, since $\Delta\lambda$ can be selected, where $\Delta\lambda$ is m times with respect to a specific wavelength $\lambda$ and m-1 times with respect to near wavelength $\lambda+\Delta\lambda$, the thickness d of a specific layer in the spectrum data according to the refractive index can be represented the following equation 1.

[Equation 1]

$$\text{At the condition } \Delta\lambda \ll \lambda,$$

$$2nd = m\lambda = (m-1)(\lambda + \Delta\lambda), \text{ and if expanded,}$$

$$m\lambda = (m-1)(\lambda + \Delta\lambda) = m\lambda + m\Delta\lambda - (\lambda + \Delta\lambda)$$

$$m\Delta\lambda = \lambda + \Delta\lambda$$

$$\text{therefore, becomes } m\lambda = (\lambda + \Delta\lambda)/\Delta\lambda,$$

where, $2nd = m\lambda = \lambda(\lambda+\Delta\lambda)/\Delta\lambda \approx \lambda^2/\Delta\lambda = 1/\Delta(1/\lambda)$.

Since multiplication $2nd$ and $\lambda/1\lambda$ is 1 (one), if, in the experiment, a relationship function between the reflectivity intensity and $\Delta(1/\lambda)$ can be obtained, an FFT function with respect the $2nd$ corresponding to transform factor of $\Delta(1/\lambda)$ by taking the FFT wholly.

Where, a $d$ value where a peak appears is the thickness we wish to obtain.

For reference, the description for the FFT is represented to a generalized equation as follows.

A relationship equation between the intensity I and the wavelength $\lambda$ becomes $I = f(\lambda) = g(\Delta(1/\lambda))$.

If applying the FFT to both sides, then the equation can be expressed as following equation 2.

[Equation 2]

$$FFT\{1\} = FFT\left\{g\left(\Delta\left(\frac{1}{\lambda}\right)\right)\right\} = \int g\left(\Delta\left(\frac{1}{\lambda}\right)\right)e^{-2\pi i\left(\Delta\left(\frac{1}{\lambda}\right)\right)2nd}d(2nd) = h(2nd).$$

However, since the conventional method does not consider the refractive index dispersion of thin film material, the gap between peaks decreases gradually. More especially, according to the conventional art, there are disadvantages that since the refractive index is varied by depending upon the wavelength, thickness values obtained according to the refractive index for dividing a Fourier peak position are varied and reduction of size and increment of a width of the peak are caused.

Thus, since the materials consist of an actual thin film has a wavelength dependency of the refractive index, that is, since there is a refractive index dispersion of the thin film, the energy difference by the interference between two lights at a frequency period is not uniform. With this reason, the width of the peak of the frequency that is obtained when the Fast Fourier Transform of the reflective spectrum is wider according to degree of the refractive index dispersion, and the measuring error for obtaining the thickness of the thin film because of the imprecise position of the peak is increase. Therefore, in order to precisely measure the thickness of the thin film, the refractive index dispersion should be considered.

Accordingly, the present invention is directed to a method for measuring thickness of an optical disc that substantially obviates one or more problems due to limitations and disadvantages of the related art.

An object of the present invention is to provide a method for high precisely measuring thickness of an optical disc with a rapid speed by using a position of peak value of a reflected light in an interference area obtained by Fast Fourier Transform of a variation of refractive index according to a wavelength, that is, a spectrum being reflected with the refractive index as a function of the wavelength.

Another object of the present invention is to provide an improved method for high precisely measuring thickness of an optical disc by keeping accuracy of determining a peak position as well as preventing the expansion of a width of the peak when the Fourier Transform even when a reflecting film is formed on a substrate at a uniform area ratio by a reflective light or multiple thin films are formed on the substrate.

Another object of the present invention is to provide a method for precisely measuring thickness of an optical disc to be applicable not only a reflective index spectrum but also any other spectrum vibrated by an interference of a thick thin film such as a transmittance spectrum.

## Brief Description of the Drawings

Further objects and advantages of the invention can be more fully understood from the following detailed description taken in conjunction with the accompanying drawings, in which:

FIG. 1 illustrates a schematic construction of an apparatus for measuring thickness of a thin film of an optical disc according to a related art;
FIG. 2A illustrates a graph showing a luminous intensity in each wavelength supplied to a computer according to the related art;
FIG. 2B illustrates a graph of Fast Fourier Transform of the reflectivity spectrum by using FIG. 2A.
FIG. 3 illustrates a flowchart showing a method for measuring thickness of an optical disc according to the present invention;
FIG. 4 illustrates a lateral constructive view of an optical disc for a High Density-DVD according to the present invention;
FIG. 5A illustrates a graph showing spectrum data by wavelength by measuring an intensity of a reflective light according to a wavelength of a light according to the present invention;
FIG. 5B illustrates a graph setting the reflective light as a vertical axis and a value that a refractive index is reflected by a function of a wavelength as a horizontal axis by using FIG. 5A;
FIG. 5C illustrates a Fast Fourier Transform graph of the spectrum by wavelength by using FIG. 5B;
FIG. 6 illustrates a graph showing a refractive index dispersion curve of a dielectric thin film with a thickness $30\mu m$; and
FIGs. 7A and 7B illustrate graphs showing intervals between the reflective spectrums with respect to energy through whether the refractive index dispersion of the dielectric thin film is considered or not.

### Best mode for Carrying Out the Invention

To achieve these objects and other advantages and in accordance with the purpose of the invention, as embodied and broadly described herein, a method for measuring thickness of an optical disc by using an interference effect of the optical disc layer, includes the steps of detecting an intensity of a reflective light according to a wavelength of a light as a spectrum data for each wavelength, converting the detected spectrum data for each wavelength into a spectrum value as a function of a wavelength that a refractive index is reflected, and detecting a position where the intensity of the reflective light has a peak as a thickness of a spacer layer and a cover layer respectively by converting the converted value into a length of an interference area for representing a layer thickness of the optical disc by the Fast Fourier Transform.

In another aspect of the present invention, the spectrum value as a function of a wavelength that a refractive index is reflected prefers to be $n(\lambda)/2\lambda$.

Reference will now be made in detail to the preferred embodiments of the present invention, examples of which are illustrated in the accompanying drawings. Wherever possible, the same reference numbers will be used throughout the drawings to refer to the same or like parts.

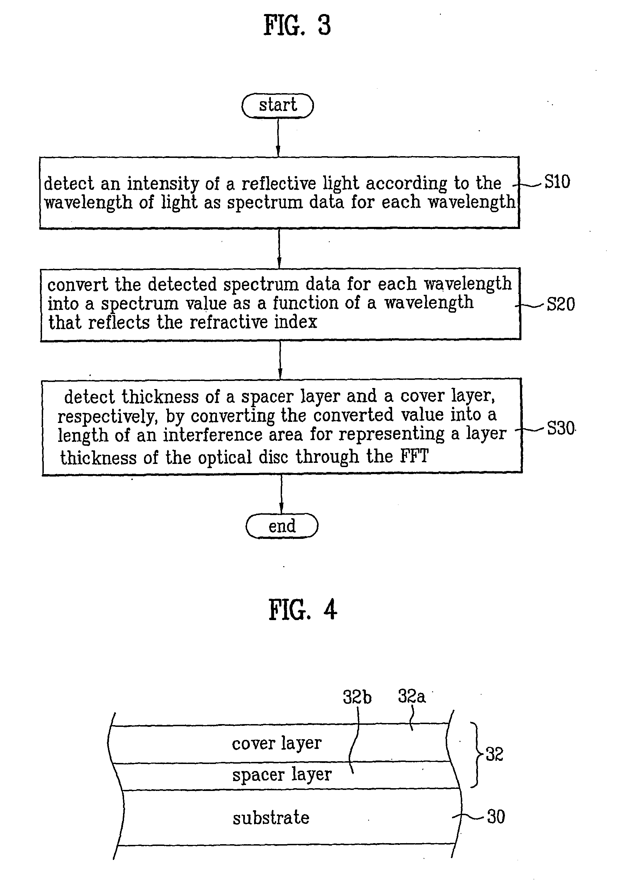

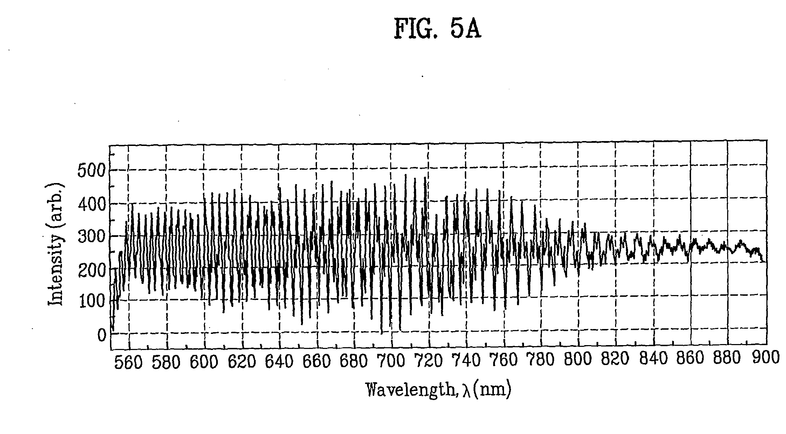

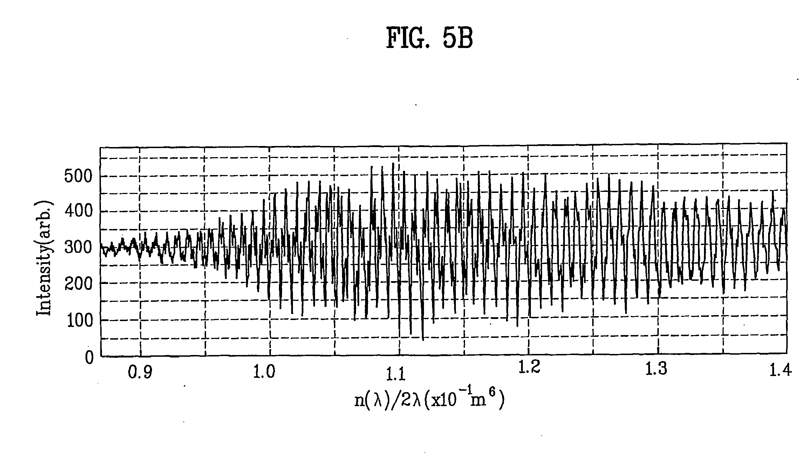

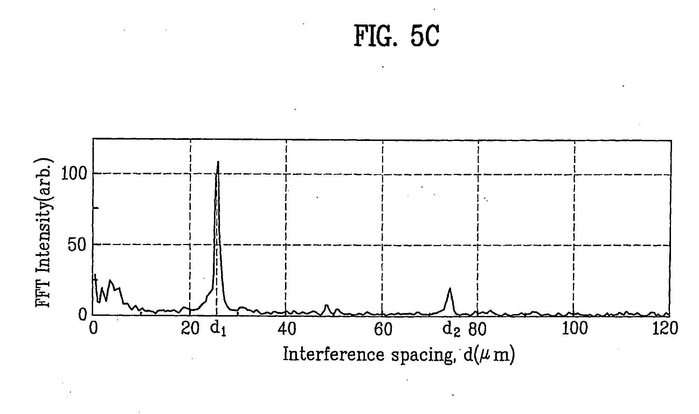

FIG. 3 illustrates a flowchart showing a method for measuring thickness of an optical disc according to the present invention, FIG. 4 illustrates a lateral constructive view of an optical disc for a High Density-DVD according to the present invention, FIG. 5A illustrates a graph showing spectrum data by wavelength by measuring an intensity of a reflective light according to a wavelength of a light according to the present invention, FIG. 5B illustrates a graph setting the reflective light as a vertical axis and a value that a refractive index is reflected by a function of a wavelength as a horizontal axis by using FIG. 5A, and FIG. 5C illustrates a Fast Fourier Transform graph of the spectrum by wavelength by using FIG. 5B.

FIG. 4 illustrates the optical disc for a High Density DVD (hereinafter referred to 'HD-DVD') appeared before the footlights as a next generation optical recording medium recent. As illustrated in FIG. 4, major layers of the HD-DVD are a cover layer (CL) 32a of thickness about $80\mu m$ and a spacer layer (SL) 32b having thickness of $10\mu m$, below the cover layer 32a.

An apparatus for measuring thickness of the optical disc, as illustrated in FIG. 1, includes a light source, an optical fiber, a lens, a substrate with a thin film, a monochromator, an optical measuring element arrangement, and a computer.

By using the optical disc thickness measuring apparatus constructed as described above, the thickness of the HD-DVD used as a sample for measurement is detected as spectrum data by wavelength by detecting an intensity of the reflective light according to the wavelength of the light (Step S10). The detected data are illustrated in FIG. 5A.

Before the Fast Fourier Transform for the thickness measurement, taking that the refractive index varies according to the wavelength into consideration, the detected spectrum data by wavelength is converted into spectrum data that the refractive index is reflected into the function of wavelength (Step S20). At that time, an equation for processing the spectrum that the refractive index is reflected into the function of wavelength can be expressed the following equation 3.

[Equation 3]

$$2n(\lambda)d = m\lambda$$

$$2n(\lambda + \Delta\lambda)d = (m-1)(\lambda + \Delta\lambda)$$

If developing the above second equation, then

$$2n(\lambda)d + 2\Delta n\lambda d = m\lambda + m\Delta\lambda - \lambda - \Delta\lambda$$

where, $\Delta n = n(\lambda+\Delta\lambda)-n(\lambda)$, if substituting the upper equation into the first equation and developing the substituted first equation, then

$$m = (2\Delta nd / \Delta\lambda) + (\lambda + \Delta\lambda / \Delta\lambda) \Rightarrow \text{ if substituting the first equation, then}$$

$$2n(\lambda)d = (2\lambda\Delta nd / \Delta\lambda) + ((\lambda + \Delta\lambda)\lambda / \Delta\lambda)$$

$$2(n(\lambda) - \lambda\Delta n / \Delta\lambda)d = (\lambda + \Delta\lambda)\lambda / \Delta\lambda$$

$$(2\lambda^2 / \Delta\lambda)((n(\lambda)\Delta\lambda - \lambda\Delta\lambda) / \lambda^2)d = (\lambda + \Delta\lambda)\lambda / \Delta\lambda$$

$$2\Delta(n(\lambda) / \lambda)d = (\lambda + \Delta\lambda) / \lambda = 1 + \Delta\lambda / \lambda \approx 1(\Delta\lambda / \lambda \ll 1)$$

where, the latest term can be neglected by applying a first order approximation.

By using function relationship with respect to $\Delta(n(\lambda)/\lambda)$ of the intensity of the light obtained according to the equation as described above, the apparatus can obtain the spectrum data that the refractive index is reflected into the function of wavelength, where FIG. 5B illustrates a graph setting the reflective light as a vertical axis and a value $n(\lambda)/2\lambda$ that a refractive index is reflected by a function of a wavelength as a horizontal axis.

Finally, if the converted data in the previous step is converted into a length of an interference area for representing the thickness of the optical disc through the Fast Fourier Transform, then a position where the intensity of the reflected light has a peak value. The position of each detected peak value becomes the thickness of the spacer layer and the cover layer (Step S30).

FIG. 5C illustrates a graph of takes a vertical axis as the intensity of the light by the Fast Fourier Transform and a horizontal axis as the interference area representing the thickness.

As illustrated in FIG. 5C, a peak value appeared at a position of $d_1$ on the horizontal axis is a value appeared when a refractive index $n_1$ with respect to the spacer layer is expressed as a function of wavelength of $n_1(\lambda)$ and converted by the Fast Fourier Transform, and a value of a position where the peak value appears represents the thickness of the spacer layer of the optical disc. Meanwhile, a peak value appeared at a position of $d_2$ on the vertical axis is a value appeared when a refractive index $n_2$ with respect to the cover layer is expressed as a function of wavelength of $n_2(\lambda)$ and converted by the Fast Fourier Transform, and a value of a position where the peak value appears represents the thickness of the cover layer of the optical disc.

The measurement of the thickness of the optical disc by using the Fast Fourier Transform by reflecting the refractive index into a function of wavelength according to the present invention will be described in detail through experimental values by using the thickness of the thin film.

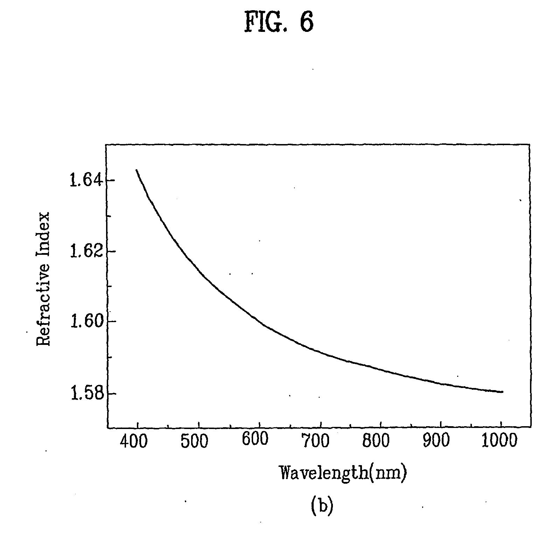

FIG. 6 illustrates a graph showing a refractive index dispersion curve of a dielectric thin film with a thickness $30\mu m$.

As illustrated in FIG. 6, by reflecting the refractive index dispersion when the Fast Fourier Transform is performed, it can be understood that the peak width decreases and the peak size increases through the reflectivity spectrum analysis by the dielectric thin film with a thickness of 30μm. At that time, the dielectric thin film is defined as sole thin film to exist in ambient without a substrate layer for supporting the dielectric thin film.

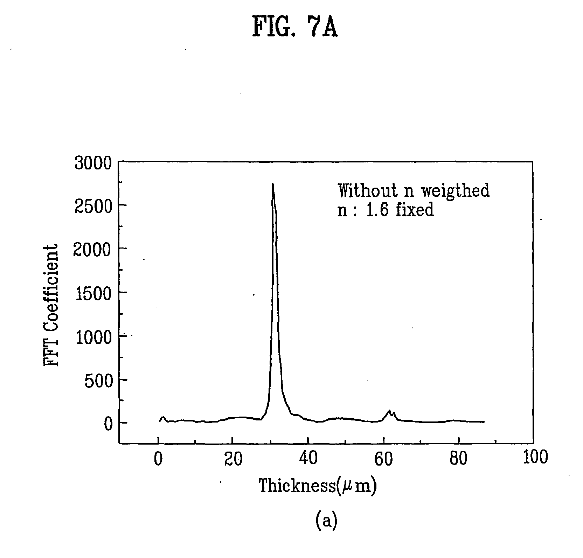

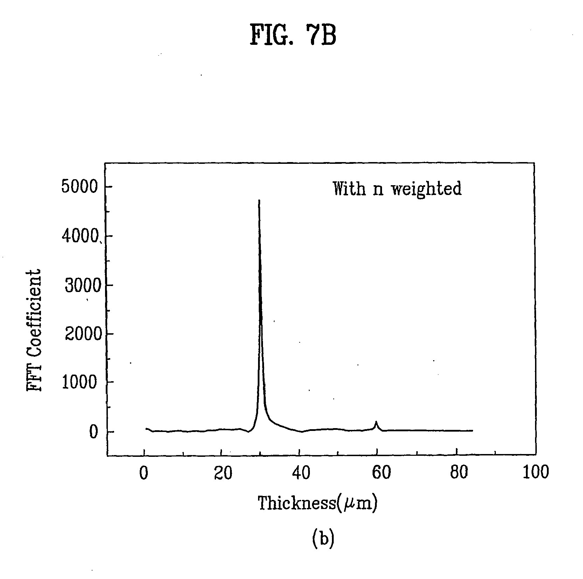

This fact appears more remarkably after performing the Fast Fourier Transform to cases whether the refractive index is reflected or not. Referring to FIGs. 7A and 7B, FIG. 7A illustrates a Fast Fourier Transform graph of the reflective spectrum when the refractive index dispersion of the dielectric thin film is not considered, and FIG. 7B illustrates a Fast Fourier Transform graph of the reflective spectrum when the refractive index dispersion of the dielectric thin film is reflected as a function of wavelength.

As illustrated in FIGs. 7A and 7B, in a Fast Fourier Transform graph when the refractive index dispersion is reflected, the peak width largely decreases from 1.61μm to 0.44μm, while the peak size increases about 1.7 times. These increment of the peak size and decrement of the peak width are reasonable from which a vibration interval of the reflective index spectrum becomes uniform when the refractive index dispersion is reflected so that clearly represents the effect of the Fast Fourier Transform considering the refractive index.

Another effect obtained when the refractive index dispersion is considered appears at a thickness value obtained after the Fast Fourier Transform. FIG. 7A illustrates the graph representing the horizontal axis with the thickness by fixing the refractive index to n=1.6 and performing the Fast Fourier Transform. Since the dielectric thin film has different refractive index according to the wavelength as illustrated in FIG. 6, the obtained thickness value varies according to the refractive index for dividing a Fourier peak position.

Therefore, that the thickness value 30.71μm estimated from the peak in FIG. 7A is different from the actual thickness 0.71μm, is caused by which the used refractive index n=1.6 does nor reflect properly an effective refractive index of the reflectivity spectrum ranges the region of 500nm to 900nm, and can be regarded an error basically comes from not taking the refractive index dispersion into consideration.

However, since the refractive index dispersion is precisely reflected in FIG. 7B illustrating the Fast Fourier transform graph for considering the refractive index dispersion, a precise thickness value of 30.0μm is estimated so that a rapid analyzing speed and a high precise thickness measurement can be achieved.

## Industrial applicability

As described above, the method for measuring thickness of an optical disc by using the interference effect of the optical disc's layer has advantages as follows.

First, in the measurement of the thickness of the optical disc through the peak value position of the reflected light in the interference area obtained by the Fast Fourier Transform of the reflectivity spectrum in which the refractive index dispersion of the thin film is reflected by adding an extra refractive index, the measurement of the thickness of the optical disc can be performed precisely during keeping a rapid analyzing speed so that the reliability of the measuring apparatus can be increased and the productivity can be also enhanced.

Second, according to the present invention, regardless of type and structure of the disc, a reflective layer of uniform area ratio formed on a substrate, or multiple layer thin film formed on the substrate, the thickness of the optical disc can be measured with a high precision and a rapid analyzing speed as well as the measuring method of the present invention can be applied to a spectrum having a vibration by the interference of the thick thin film such as a transmittance spectrum, so that through demands for demanding a real-time measurement and a precise analysis from the industries can be corresponded by means of the rapid analyzing speed and the high precise measurement of the thickness of the optical disc, and the competition power in the local and abroad markets can be enhanced.

It will be apparent to those skilled in the art than various modifications and variations can be made in the present invention. Thus, it is intended that the present invention covers the modifications and variations of this invention provided they come within the scope of the appended claims and their equivalents.

Further, the subject matter described in the following paragraphs is part of the disclosure of the present application, each of which can be claimed in the present application, and in one or more future divisional applications there from:

A method for measuring thickness of an optical disc by using an interference effect of the optical disc layer, comprising the steps of: detecting an intensity of a reflective light according to a wavelength of a light as spectrum data for each wavelength; converting the detected spectrum data for each wavelength into a spectrum value as a function of a wavelength that a refractive index is reflected; and detecting a position where the intensity of the reflective light has a peak as a thickness of a spacer layer and a cover layer respectively by converting the converted value into a length of an interference area for representing a layer thickness of the optical disc by the Fast Fourier Transform.

The method set forth above, wherein the spectrum value as a function of a wavelength that a refractive index is reflected is $n(\lambda)/2\lambda$.

The method set forth above, wherein the optical disc layer comprises the spacer layer with a refractive index $n_1$ and the cover layer with a refractive index $n_2$ different from the refractive index $n_1$, and respective positions $d_1$ and $d_2$

where the intensity of the light obtained by reflecting the refractive index into a function of a wavelength become a peak value are obtained as the thickness.

**Claims**

1. A system for measuring the thickness of one or more layers (32) of an optical disc that includes a spacer layer (32b) and a cover layer (32a) by using an interference effect of an optical disc layer, the apparatus comprising:

   a spectroscope (42) to separate light, reflected from a surface of an optical disc, into constituent frequencies thereof;
   an optical intensity measuring unit (44) to measure intensities of the constituent frequencies, respectively, as a first spectrum of data; and
   a processor (46), the processor (46) being adapted to do at least the following:

   convert the first spectrum data into a second spectrum of values that exhibits variation as a function of wavelength and refractive index,
   transform the second spectrum using a Fast Fourier Transform, and
   detect a thickness of one or more of the spacer layer (32b) and the cover layer (32a), respectively, based upon the transformed spectrum.

2. The system of claim 1, wherein the processor (46) is further operable to determine the second spectrum as a function of $n(\lambda)/2\lambda$, where n is the index of refraction and $\lambda$ is the wavelength.

3. The system of claim 1 or 2, wherein the spacer layer (32b) has a refractive index $n_1$ and the cover layer (32a) has a refractive index $n_2$ different from the refractive index $n_1$.

4. The system of one of the preceding claims, wherein the processor (46) is further operable to treat peak values of intensity of the transformed spectrum at positions $d_1$ and $d_2$ as indicating $d_1$ and $d_2$ as being the thicknesses of respective layers (32).

5. The system of one of the preceding claims, wherein the processor (46) is further operable to convert the first spectrum data into a second spectrum using the following equation:

$$2n(\lambda)d = m\lambda$$

$$2n(\lambda+\Delta\lambda)d = (m-1)(\lambda+\Delta\lambda),$$

   wherein d is a thickness,
   n is a refractive index of the optical disc layer,
   $\lambda$ is the wavelength, and
   m is an integer value.

6. The system of one of the preceding claims, wherein the transformed spectrum represents intensity as a function of a length (d) of an interference area, and the length (d) further represents a thickness of a given layer.

7. The system of one of the preceding claims, wherein the second spectrum varies as a function of a first factor being the index of refraction and a separate second factor being the wavelength.

8. The system of claim 7, wherein the second spectrum varies as a function of the following equation,

$$n/b\lambda$$

where $\lambda$ is the wavelength and is the second factor,
where n is the index of refraction and is the first factor and is itself a function of $\lambda$, and
where b is an integer.

9. The system of one of the preceding claims, wherein the refractive index is dependent on wavelength.

10. An apparatus for measuring thickness of one or more layers (32) of an optical disc by using an interference effect, the apparatus comprising:

   means for measuring intensities of reflected light according to a plurality of wavelengths and providing the same as a first set of intensities that vary as a function of wavelength;
   means for converting the first set into a second set of intensities that varies as a function of the index of refraction as well as the wavelength;
   means for applying a Fast Fourier Transform to the second set; and
   means for determining a thickness of one or more layers (32) of the optical disc based upon the transformed set.

11. The apparatus of claim 10, wherein the second set varies as a function of a first factor being the index of refraction, and a separate second factor being the wavelength.

12. The apparatus of claim 11, wherein the second set varies as a function of the following equation,

$$n/b\lambda$$

where $\lambda$ is the wavelength and is the second factor,
where n is the index of refraction and is the first factor and is itself a function of $\lambda$, and
where b is an integer.

13. The apparatus of one of claims 10 to 12, wherein the refractive index is dependent on wavelength.

14. A device to determine the thickness of one or more layers (32) of an optical disc that includes a spacer layer (32b) and a cover layer (32a) by using an interference effect of an optical disc layer, the device comprising:

   a processor (46) operable to execute a program of instructions; and
   a machine-readable medium, operatively connected to the processor (46), having thereon machine-executable instructions for execution by the processor (46), the instructions including the following,
   receiving a spectrum of values that exhibits variation in intensity as a function of wavelength and refractive index, the spectrum representing light reflected of a surface of an optical disc,
   transforming the spectrum using a Fast Fourier Transform, and
   detecting a thickness of one or more of the spacer layer (32b) and the cover layer (32a), respectively, based upon the transformed spectrum.

15. The device of claim 14, wherein the processor (46) is further operable to convert the spectrum into another spectrum as a function of $n(\lambda)/2\lambda$, where n is the index of refraction and $\lambda$ is the wavelength.

16. The device of claim 14 or 15, wherein the spacer layer (32b) has a refractive index $n_1$ and the cover layer (32a) has a refractive index $n_2$ different from the refractive index $n_1$.

17. The device of one of claims 14 to 16, wherein the instructions further include treating peak values of intensity of the transformed spectrum at positions $d_1$ and $d_2$ as indicating $d_1$ and $d_2$ as being the thicknesses of respective layers (32).

18. The device of one of claims 14 to 17, wherein the converting instruction includes using the following equation:

$$2n(\lambda)d = m\lambda$$

$$2n(\lambda+\Delta\lambda)d = (m-1)(\lambda+\Delta\lambda) ,$$

wherein d is a thickness,
n is a refractive index of the optical disc layer,
$\lambda$ is the wavelength, and
m is an integer value.

19. The device of one of claims 14 to 18, wherein the transformed spectrum represents intensity as a function of a length (d) of an interference area, and the length (d) further represents a thickness of a given layer.

20. The device of claim 15, wherein the other spectrum varies as a function of a first factor being the index of refraction, and a separate second factor being the wavelength.

21. The device of claim 20, wherein the processor (46) is further operable to convert the spectrum into another spectrum that varies as a function of the following equation,

$$n(\lambda)/b\lambda$$

where $\lambda$ is the wavelength,
where n is the index of refraction and is itself a function of $\lambda$, and
where b is an integer.

22. The device of one of claims 14 to 21, wherein the refractive index is dependent on wavelength.

23. A machine-readable medium having thereon machine-readable instructions execution of which by a machine (46) determines the thickness of one or more layers (32) of an optical disc that includes a spacer layer (32b) and a cover layer (32a) by using an interference effect of an optical disc layer, the machine-readable instructions including:

receiving a spectrum of values that exhibits variation in intensity as a function of wavelength and refractive index, the spectrum representing light reflected of a surface of an optical disc;
transforming the spectrum using a Fast Fourier Transform; and
detecting a thickness of one or more of the spacer layer (32b) and the cover layer (32a), respectively, based upon the transformed spectrum.

# FIG. 1
# Related Art

# FIG. 2A
## Related Art

Wavelength(nm)

# FIG. 2B
## Related Art

Interference distance($\mu$m)

## FIG. 3

start

detect an intensity of a reflective light according to the wavelength of light as spectrum data for each wavelength ⌐S10

convert the detected spectrum data for each wavelength into a spectrum value as a function of a wavelength that reflects the refractive index ⌐S20

detect thickness of a spacer layer and a cover layer, respectively, by converting the converted value into a length of an interference area for representing a layer thickness of the optical disc through the FFT ⌐S30

end

## FIG. 4

32b    32a

cover layer

spacer layer                    } 32

substrate                       ⌐30

# FIG. 5A

EP 1 873 482 A2

# FIG. 5B

FIG. 5C

EP 1 873 482 A2

## FIG. 6

(b)

# FIG. 7A

(a)

# FIG. 7B

(b)